# FASCICULE DE BREVET EUROPEEN

(11) **EP 3 982 001 B1**
(45) Date de publication et mention de la délivrance du brevet: **10.04.2024**
(21) Numéro de dépôt: 21200966.6
(22) Date de dépôt: 05.10.2021
(51) Int. Cl.: F16F 1/371, F16F 15/08

(54) **VÉHICULE COMPRENANT UN SYSTÈME DE DÉCOUPLAGE DE VIBRATIONS**
FAHRZEUG MIT EINEM SCHWINGUNGSENTKOPPELUNGSSYSTEM
VEHICLE COMPRISING A SYSTEM FOR UNCOUPLING VIBRATIONS

(30) Priorité: 06.10.2020 FR 2010189
(43) Date de publication de la demande: 13.04.2022
(73) Titulaire: SpeedInnov, 75008 Paris (FR)
(72) Inventeur: BERNARD, Alexandre, 17340 Chatelaillon Plage (FR)
(74) Mandataire: Lavoix

(56) Documents cités:
- EP-A1- 0 412 864
- DE-A1- 4 414 218
- DE-C- 975 122
- DE-U- 1 610 135
- US-A1- 2002 056 953
- US-A1- 2010 086 377

## Description

La présente invention concerne un système de découplage de vibrations pour un véhicule, notamment un véhicule ferroviaire.

La présente invention concerne également un véhicule, notamment un ferroviaire, comprenant un tel système de découplage.

US 2002/056953 A1 décrit un support absorbant les chocs pour fixer un ensemble d'échappement à un véhicule.

Des véhicules ferroviaires connus comprennent au moins une caisse formant une structure pour un habitacle ou compartiment de passagers du véhicule ferroviaire. Un habillage intérieur est agencé sur un côté intérieur de la caisse pour le confort et la sécurité des passagers. L'habillage intérieur comprend par exemple des éléments de paroi et des éléments de plafond.

La caisse est sujette à des vibrations lors de l'exploitation du véhicule ferroviaire. Pour découpler des vibrations de la caisse par rapport à l'habillage intérieur, des systèmes de découplage de vibrations sont connus. Par exemple, le document DE 10 2011 114 356 A1 décrit un système dans lequel un matériau amortisseur est agencé pour découpler l'habillage intérieur des vibrations de la caisse.

Cependant, de tels systèmes connus présentent une structure complexe. En outre, le montage de tels systèmes est compliqué.

Un but de la présente invention est ainsi d'obtenir un système de découplage présentant une structure qui est simple, et qui est en outre facile à monter.

A cet effet, l'invention a pour objet un véhicule selon la revendication 1.

Selon des modes de réalisation particuliers, le véhicule est selon l'une quelconque des revendications 2 à 9.

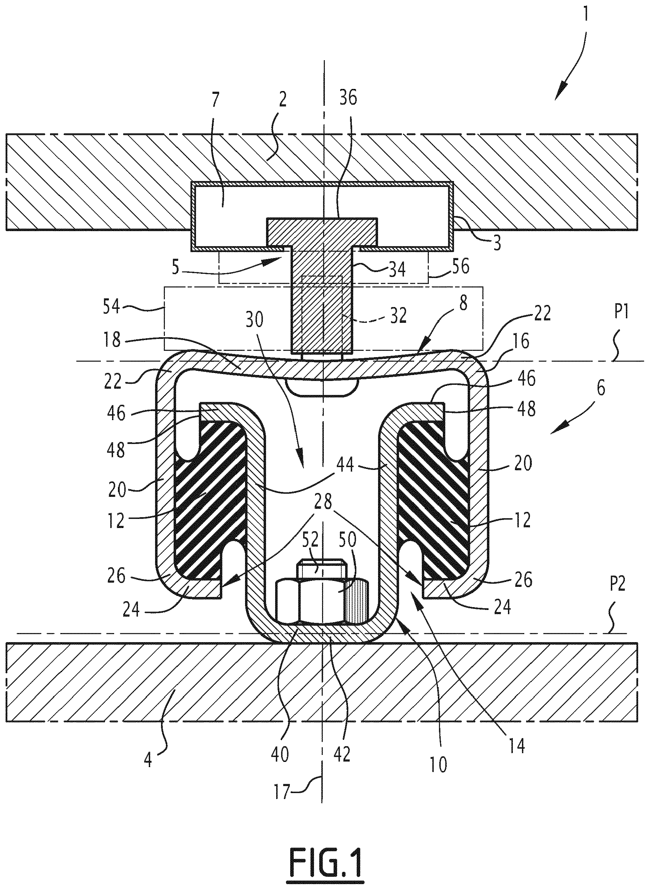

L'invention sera mieux comprise à la lecture de la description qui va suivre, donnée uniquement à titre d'exemple et faite en se référant au dessin annexé, à savoir
[Fig 1] l'unique figure 1 qui est vue schématique, en coupe, d'une partie d'un véhicule comprenant un système de découplage selon l'invention.

En référence à la figure 1, on décrit un véhicule 1 comprenant un élément de caisse 2, un élément d'habillage intérieur 4 et un système de découplage 6 de vibrations.

Le véhicule 1 est par exemple un véhicule ferroviaire. En variante, le véhicule 1 est un véhicule de transport routier, tel qu'un bus par exemple.

L'élément de caisse 2 fait partie d'une caisse du véhicule. La caisse comprend par exemple une armature définissant un espace intérieur à la caisse et un espace extérieur à la caisse. L'espace intérieur à la caisse forme par exemple un compartiment de réception de passagers, dans lequel des passagers et/ou des opérateurs du véhicule 1 sont situés. En complément ou en variante, l'espace intérieur reçoit des équipements du véhicule 1.

L'élément de caisse 2 comprend par exemple un élément d'un toit du véhicule 1. En variante, l'élément de caisse 2 comprend un élément d'une paroi ou d'un plancher du véhicule 1.

L'élément de caisse 2 comprend au moins un rail de fixation 3 s'étendant par exemple selon une direction longitudinale. La direction longitudinale est par exemple une direction de circulation du véhicule 1. En variante, la direction longitudinale du rail de fixation 3 est par exemple perpendiculaire à la direction de circulation du véhicule 1.

Le rail de fixation 3 est par exemple en forme de C dans un plan perpendiculaire à la direction longitudinale, présentant notamment une ouverture 5 configurée pour faire face au système de découplage 6.

Le rail de fixation 3 forme un espace de fixation 7 configuré pour recevoir une partie du système de découplage 6. Le rail de fixation 3 est ainsi configuré pour maintenir l'élément d'habillage intérieur 4 via l'intermédiaire du système de découplage 6.

L'élément d'habillage intérieur 4 est visible de l'espace intérieur de la caisse. Par exemple, l'élément d'habillage intérieur 4 est un plafond ou un parement de paroi.

Le système de découplage 6 de vibrations est configuré pour relier l'élément de caisse 2 à l'élément d'habillage intérieur 4 du véhicule 1. Dans la suite de la description, le système de découplage 6 de vibrations est dénommé « système de découplage 6 ».

Le système de découplage 6 est configuré pour découpler des vibrations de l'élément de caisse 2 par rapport à l'élément d'habillage intérieur 4.

Par « découplage » et « découpler », il est entendu que des vibrations sont au moins partiellement atténuées entre les éléments reliés par le système de découplage 6. Par exemple, lorsque l'élément de caisse 2 reçoit des vibrations, ces vibrations sont au moins partiellement atténuées par le système de découplage 6 par rapport à l'élément d'habillage intérieur 4. Par exemple, le système de découplage 6 est configuré pour atténuer des gammes de fréquences prédéfinies.

Notamment, le système de découplage 6 est configuré pour empêcher un contact entre l'élément de caisse 2 et l'élément d'habillage intérieur 4.

Le système de découplage 6 comprend une première partie 8 configurée pour être fixée à l'élément de caisse 2, une deuxième partie 10 configurée pour être fixée à l'élément d'habillage intérieur 4 et un matériau amortisseur 12 reliant la première partie 8 à la deuxième partie 10 de telle sorte qu'une vibration de la première partie 8 est découplée d'une vibration de la deuxième partie 10.

La première partie 8 comprend un premier profilé 16 en forme de C présentant une ouverture 14 configurée pour faire face à l'élément d'habillage intérieur 4.

Par l'expression « ouverture configurée pour faire face à l'élément d'habillage intérieur », il est entendu que l'ouverture 14 s'étend en regard de l'habillage intérieur 4.

Par exemple, le premier profilé 16 présente un axe de symétrie 17 passant par un centre de l'ouverture 16. Lorsque l'ouverture 14 fait face à l'élément d'habillage intérieur 4, une prolongation de l'axe de symétrie 17 s'étend à travers de l'élément d'habillage intérieur 4, comme par exemple visible dans la figure.

Le premier profilé 16 comprend par exemple une base 18, deux flancs 20 reliés à des extrémités 22 opposées de la base 18, et deux parties terminales 24 reliées chacune à l'un des deux flancs 20. Les flancs 20 s'étendent par exemple parallèlement l'un par rapport à l'autre selon une direction perpendiculaire à un premier plan P1 dans lequel s'étend la base 18.

Les deux parties terminales 24 s'étendent par exemple parallèlement à la base 18, notamment à partir d'extrémités 26 des flancs 20 opposés à des extrémités des flancs 20 reliés aux extrémités 22 de la base 18. Les deux parties terminales 24 comportent par exemple chacune un bord libre 28. Les bords libres 28 font par exemple face l'un à l'autre. Par ceci, il est entendu que les bords libres 28 sont opposés l'un par rapport à l'autre.

De préférence, l'ouverture 14 est délimitée par les bords libres 28 des deux parties terminales 24.

Le premier profilé 16 est par exemple une seule pièce. Dans ce cas, la base 18, les deux flancs 20 et les deux parties terminales 24 sont par exemple formés par courbure, notamment par courbure au niveau des extrémités 22 et 26.

Le premier profilé 16, et en particulier la base 18, les deux flancs 20 et les deux parties terminales 24 définissent un espace intérieur 30. L'espace intérieur 30 est par exemple configuré pour recevoir le matériau amortisseur 12. Selon un exemple, l'espace intérieur 30 est en outre configuré pour recevoir au moins partiellement la deuxième partie 10.

La première partie 8 comprend en outre un axe 32 faisant saillie de la base 18. L'axe 32 fait par exemple saillie de la base 18 selon une direction perpendiculaire au premier plan P1. Par exemple, l'axe 32 s'étend, à partir de la base 18, à l'extérieur de l'espace intérieur 30. L'axe présente par exemple un filet.

La première partie 8 comprend en outre une vis 34 vissée sur l'axe 32. La vis 34 est par exemple une vis creuse présentant un filet à l'intérieur de la vis 34.

La vis 34 comporte une tête 36 configurée pour être reçue dans l'espace de fixation 7 formé par le rail de fixation 3 de l'élément de caisse 2.

Pour positionner la vis 34 par rapport au rail de fixation, la vis 34 est par exemple insérée dans le rail de fixation 3, et puis positionnée par exemple de manière à ce que la vis 34 s'étend selon une direction formant un angle de 90° avec un axe longitudinal du rail de fixation 3.

La première partie 8 comprend par exemple en outre une rondelle élastomère 54 et une rondelle métallique 56. La fixation de la vis 34 se fait par exemple par un assemblage vissé avec le premier profilé 16, avec la rondelle élastomère 54 et la rondelle métallique 56.

Par exemple, la rondelle élastomère 54 est positionnée sur le premier profilé 16, et la rondelle métallique 56 est positionnée entre la rondelle élastomère 54 et le rail de fixation 3. Au serrage, la tête 36 de la vis 34 se retrouve bloquée en position dans le rail de fixation 3.

La rondelle élastomère 54 est par exemple en caoutchouc éthylène-propylène-diène monomère, également appelé caoutchouc EPDM. La métallique 56 est par exemple en acier zingué. D'autres matériaux sont bien entendu envisageables.

La vis 34 est par exemple configurée pour régler une distance entre la première partie 8 et le rail de fixation 3 de l'élément de caisse 2.

La deuxième partie 10 est configurée pour être reliée via le matériau amortisseur 12 à la première partie 8.

La deuxième partie 10 comprend par exemple un deuxième profilé 40. Le deuxième profilé 40 s'étend par exemple à travers l'ouverture 14 du premier profilé 16.

Le deuxième profilé 40 est par exemple en forme différente du premier profilé 16. Par exemple, le deuxième profilé 40 est sensiblement en forme de U. Selon un exemple, le deuxième profilé 40 est en forme de section d'un chapeau à calotte haute, ou haut-de-forme.

Par exemple, le deuxième profilé 40 comprend une base 42, deux flancs 44 reliés à des extrémités opposées de la base 42, et deux parties terminales 46 reliées chacune à l'un des deux flancs 44. Les flancs 44 s'étendent par exemple parallèlement l'un par rapport à l'autre selon une direction perpendiculaire à un deuxième plan P2 dans lequel s'étend la base 42. Le deuxième plan P2 est par exemple parallèle au premier plan P1.

Les parties terminales 46 s'étendent par exemple dans un plan parallèle au deuxième plan P2. Par exemple, les parties terminales 46 s'étendent, à partir des flancs 44, selon des directions opposées l'une par rapport à l'autre. En particulier, les parties terminales 46 présentent des bords libres 48 s'étendant vers les flancs 20 du premier profilé 16.

Le deuxième profilé 40 est par exemple une seule pièce. Dans ce cas, la base 42, les deux flancs 44 et les deux parties terminales 46 sont par exemple formés par courbure.

La deuxième partie 10 comprend en outre un écrou 50, par exemple fixé à la base 42 du deuxième profilé 40, notamment par soudure.

L'écrou 50 est configuré pour recevoir une vis 52 s'étendant à partir de l'élément d'habillage intérieur 4 de manière à fixer la deuxième partie 10 à l'élément d'habillage intérieur 4. La vis 52 est par exemple configurée pour être vissée à travers une ouverture, non représentée, de l'élément d'habillage intérieur 4 dans l'écrou 50. La deuxième partie 10 est ainsi fixée à l'élément d'habillage intérieur 4.

La première partie 8 et/ou la deuxième partie 10 comprend du métal, par exemple de l'aluminium. De préférence, la première partie 8 et/ou la deuxième partie 10 consiste(nt) en métal, par exemple en aluminium.

Selon des variantes, la première partie 8 et/ou la deuxième partie 10 comprennent d'autres matériaux, par exemple des matières plastiques.

Le matériau amortisseur 12 est par exemple agencé de manière à ce qu'un contact de la première partie 8 avec la deuxième partie 10 est empêché. Par exemple, lors de vibrations de la première partie 8 par rapport à la deuxième partie 10, le matériau amortisseur 12 amortit les vibrations, par conséquent les vibrations de la deuxième partie 10 sont amorties.

Le matériau amortisseur 12 comprend par exemple du caoutchouc. De préférence, le matériau amortisseur 12 est en caoutchouc. Selon des variantes, le matériau amortisseur 12 comprend d'autres matériaux, tant que le matériau amortisseur 12 est apte découpler des vibrations entre la première partie 8 et la deuxième partie 10 en amortissant les vibrations.

Dans l'exemple de la figure, le matériau amortisseur 12 est agencé dans l'espace intérieur 30. Par exemple, le matériau amortisseur 12 est en contact avec au moins une partie des flancs 20 et 44 et/ou avec les parties terminales 24, 46.

Par exemple, le matériau amortisseur 12 comprend deux parties de matériau. Chaque partie de matériau est en contact avec un flanc 20 respectif du premier profilé 16 et avec un flanc 44 respectif du deuxième profilé 40. En variante ou en complément, chaque partie de matériau est en contact avec une partie terminale 24 respective du premier profilé 16 et avec une partie terminale respective 46 du deuxième profilé 40.

En variante non représentée, le matériau amortisseur 12 est agencé à l'extérieur de l'espace intérieur 30, par exemple entre un côté extérieur des parties terminales 24 et la deuxième partie 10. Dans ce cas, la deuxième partie 10 est également agencée à l'extérieur de l'espace intérieur 30.

On conçoit que le système de découplage 6 selon l'invention présente un certain nombre d'avantages.

Comme le système de découplage 6 comprend une première et une deuxième partie 8, 10, le système de découplage 6 a une structure simple.

Le système de découplage 6 est en outre simple à monter, car il suffit de visser l'axe 32 dans la vis 34 pour fixer la première partie 8 à l'élément de caisse 2 et de visser la vis 52 dans l'écrou 50 pour fixer la deuxième partie 10 à l'élément d'habillage intérieur 4.

Le système de découplage 6 permet en outre de protéger le matériau amortisseur 12 par exemple contre des salissures ou de l'humidité susceptible d'entrer en contact avec le matériau amortisseur 12, notamment de l'extérieur du véhicule 1, par exemple, à travers l'élément de caisse 2. En particulier, le fait que la première partie 8 comprend un premier profilé 16 en forme de C présentant l'ouverture 14 configurée pour faire face à l'élément d'habillage intérieur 4 permet d'obtenir une protection du matériau amortisseur 12 contre l'humidité et des salissures.

## Revendications

1. Véhicule (1), notamment véhicule ferroviaire, comprenant un élément de caisse (2) comprenant au moins un rail de fixation (3), un élément d'habillage intérieur (4) et un système de découplage (6), le système de découplage (6) reliant l'élément de caisse (2) du véhicule (1) à l'élément d'habillage intérieur (4) du véhicule (1), le système de découplage (6) comprenant :
- une première partie (8) fixée à l'élément de caisse (2), la première partie (8) comprenant un premier profilé (16) en forme de C présentant une ouverture (14) faisant face à l'élément d'habillage intérieur (4), la première partie (8) comprenant un axe (32) faisant saillie du premier profilé (16), et une vis (34) vissée sur l'axe (32), la vis (34) comportant une tête (36) reçue dans un espace de fixation (7) formé par le rail de fixation (3) de l'élément de caisse (2),
- une deuxième partie (10) fixée à l'élément d'habillage intérieur (4), et
- un matériau amortisseur (12) reliant la première partie (8) à la deuxième partie (10) de telle sorte qu'une vibration de la première partie (8) est découplée d'une vibration de la deuxième partie (10).

2. Véhicule (1) selon la revendication 1, dans lequel le premier profilé (16) comprend une base (18) et deux flancs (20) reliés à des extrémités opposées (22) de la base (18), les flancs (20) s'étendant parallèlement l'un par rapport à l'autre selon une direction perpendiculaire à un plan (P1) dans lequel s'étend la base (18), de préférence l'axe (32) faisant saillie de la base (18).

3. Véhicule (1) selon la revendication 2, dans lequel le premier profilé (16) comprend en outre deux parties terminales (24) reliées chacune à l'un des deux flancs (20) et s'étendant parallèlement à la base (18), les deux parties terminales (24) comportant chacune un bord libre (28), les bords libres (28) faisant face l'un à l'autre.

4. Véhicule (1) selon la revendication 3, dans lequel l'ouverture (14) est délimitée par les bords libres (28) des deux parties terminales (24).

5. Véhicule (1) selon la revendication 3 ou 4, dans lequel la base (18), les deux flancs (20) et les deux parties terminales (24) définissent un espace intérieur (30), dans lequel est agencé le matériau amortisseur (12).

6. Véhicule (1) selon l'une quelconque des revendications précédentes, dans lequel la deuxième partie (10) comprend un deuxième profilé (40) sensiblement en forme de U, s'étendant de préférence à travers l'ouverture (14) du premier profilé (16).

7. Véhicule (1) selon l'une quelconque des revendications précédentes, dans lequel le matériau amortisseur (12) comprend du caoutchouc.

8. Véhicule (1) selon l'une quelconque des revendications précédentes, dans lequel la première partie (8) et/ou la deuxième partie (10) comprend du métal, de préférence de l'aluminium.

9. Véhicule (1) selon quelconque des revendications précédentes, dans lequel la vis (34) est configurée pour régler une distance entre la première partie (8) et le rail de fixation (3) de l'élément de caisse (2).

## Patentansprüche

1. Fahrzeug (1), insbesondere Schienenfahrzeug, mit einem Wagenkastenelement (2), das mindestens eine Befestigungsschiene (3), ein Innenverkleidungselement (4) und ein Entkopplungssystem (6) umfasst, wobei das Entkopplungssystem (6) das Wagenkastenelement (2) des Fahrzeugs (1) mit dem Innenverkleidungselement (4) des Fahrzeugs (1) verbindet, wobei das Entkopplungssystem (6) Folgendes umfasst:
- einen ersten Teil (8), der an dem Wagenkastenelement (2) befestigt ist, wobei der erste Teil (8) ein erstes C-förmiges Profil (16) mit einer Öffnung (14) umfasst, die dem Innenverkleidungselement (4) zugewandt ist, wobei der erste Teil (8) eine Achse (32) umfasst, die von dem ersten Profil (16) vorsteht sowie eine Schraube (34), die auf die Achse (32) geschraubt ist, wobei die Schraube (34) einen Kopf (36) aufweist, der in einem Befestigungsraum (7) aufgenommen wird, der durch die Befestigungsschiene (3) des Wagenkastenelements (2) gebildet wird,
- einen zweiten Teil (10), der an dem Innenverkleidungselement (4) befestigt ist, und
- ein Dämpfungsmaterial (12), das den ersten Teil (8) mit dem zweiten Teil (10) verbindet, so dass eine Schwingung des ersten Teils (8) von einer Schwingung des zweiten Teils (10) entkoppelt wird.

2. Fahrzeug (1) nach Anspruch 1, bei dem das erste Profil (16) eine Basis (18) und zwei Flanken (20) umfasst, die mit gegenüberliegenden Enden (22) der Basis (18) verbunden sind, wobei die Flanken (20) sich parallel zueinander in einer Richtung senkrecht zu einer Ebene (P1) erstrecken, in der sich die Basis (18) erstreckt, wobei vorzugsweise die Achse (32) aus der Basis (18) herausragt.

3. Fahrzeug (1) nach Anspruch 2, wobei das erste Profil (16) außerdem zwei Endabschnitte (24) umfasst, die jeweils mit einer der beiden Flanken (20) verbunden sind und sich parallel zur Basis (18) erstrecken, wobei die beiden Endabschnitte (24) jeweils einen freien Rand (28) aufweisen, wobei die freien Ränder (28) einander zugewandt sind.

4. Fahrzeug (1) nach Anspruch 3, bei dem die Öffnung (14) von den freien Rändern (28) der beiden Endabschnitte (24) begrenzt wird.

5. Fahrzeug (1) nach Anspruch 3 oder 4, bei dem die Basis (18), die beiden Flanken (20) und die beiden Endabschnitte (24) einen Innenraum (30) definieren, in dem das Dämpfungsmaterial (12) angeordnet ist.

6. Fahrzeug (1) nach einem der vorhergehenden Ansprüche, wobei der zweite Teil (10) ein zweites, im Wesentlichen U-förmiges Profil (40) umfasst, das sich vorzugsweise durch die Öffnung (14) des ersten Profils (16) erstreckt.

7. System (1) nach einem der vorherigen Ansprüche, wobei das Dämpfungsmaterial (12) Kautschuk beinhaltet.

8. Fahrzeug (1) nach einem der vorhergehenden Ansprüche, wobei der erste Teil (8) und/oder der zweite Teil (10) Metall, vorzugsweise Aluminium, umfasst.

9. Fahrzeug (1) nach einem der vorhergehenden Ansprüche, wobei die Schraube (34) so konfiguriert ist, dass sie einen Abstand zwischen dem ersten Teil (8) und der Befestigungsschiene (3) des Wagenkastenelements (2) einstellt.

## Claims

1. A vehicle (1), in particular rail vehicle, comprising a body element (2) having at least one fastening rail (3), an inner trim element (4) and a decoupling system (6), the decoupling system (6) connecting the body element (2) of the vehicle (1) to the inner trim element (4) of the vehicle (1), the decoupling system (6) comprising:
- a first part (8) fixed to the body element (2), the first part (8) comprising a first C-shaped profile (16) having an opening (14) facing the interior trim element (4), the first part (8) comprising a pin (32) projecting from the first profile (16), and a screw (34) screwed onto the pin (32), the screw (34) having a head (36), received in a fixing space (7) formed by the fixing rail (3) of the body element (2),
- a second part (10) attached to the inner trim element (4), and
- a damping material (12) connecting the first part (8) to the second part (10) so that a vibration of the first part (8) is decoupled from a vibration of the second part (10).

2. A vehicle (1) according to claim 1, in which the first profile (16) comprises a base (18) and two sides (20) connected to opposite ends (22) of the base (18), the sides (20) extending parallel to one another in a direction perpendicular to a plane (P1) in which the base (18) extends, preferably the pin (32) projecting from the base (18).

3. A vehicle (1) according to claim 2, wherein the first profile (16) further comprises two end portions (24) each connected to one of the two sides (20) and extending parallel to the base (18), the two end portions (24) each comprising a free edge (28), the free edges (28) facing each other.

4. A vehicle (1) according to claim 3, in which the opening (14) is delimited by the free edges (28) of the two end parts (24).

5. A vehicle (1) according to claim 3 or 4, in which the base (18), the two sides (20) and the two end parts (24) define an interior space (30), in which the damping material (12) is arranged.

6. A vehicle (1) according to any one of the preceding claims, wherein the second part (10) comprises a second substantially U-shaped profile (40), preferably extending through the opening (14) of the first profile (16).

7. A vehicle (1) according to any one of the preceding claims, in which the damping material (12) comprises:

8. A vehicle (1) according to any one of the preceding claims, wherein the first part (8) and/or the second part (10) comprises metal, preferably aluminium.

9. A vehicle (1) according to any of the preceding claims, wherein the screw (34) is configured to adjust a distance between the first part (8) and the fixing rail (3) of the body element (2).
